# EUROPEAN PATENT APPLICATION

(11) **EP 2 365 647 A1**
(43) Date of publication of application: **14.09.2011**
(21) Application number: 09815952.8
(22) Date of filing: 23.03.2009
(51) Int. Cl.: H04B 10/00, H04B 10/04, H04B 10/06, H04B 10/14, H04B 10/142, H04B 10/152, H04B 10/26, H04B 10/28

(54) **HIGH-SPEED PULSED HOMODYNE DETECTOR IN OPTICAL COMMUNICATION WAVELENGTH BAND**

(30) Priority: 26.09.2008 JP 2008247073
(71) Applicant: Nihon University, Tokyo 102-8275 (JP)
(72) Inventor: INOUE, Shuichiro, Tokyo 102-8275 (JP); NAMEKATA, Naoto, Tokyo 102-8275 (JP)
(74) Representative: Ashton, Gareth Mark
(86) International application number: PCT/JP2009/055647
(87) International publication number: WO 2010/035533

(57) **Abstract**

The invention aims to raise operational frequency and S/N ratio of a pulsed homodyne detector to measure the quadrature amplitude of the signal pulse light. The local pulse light in telecom band is yielded at repetition rate of 80MHz. Two output lights are generated by interference of the local pulse light and the signal pulse light. A first photodiode and a second photodiode are connected differentially. The first photodiode converts one side output light to an electric signal. The second photodiode converts the other side output light to another electric signal. An M-derived low-pass filter eliminates the third harmonics of the local pulse light. Moreover, the higher frequency components than triple frequency of the repetition rate are eliminated. In this way, even when it is operated at high repetition rate of 80MHz at maximum, the quadrature amplitude of the signal pulse light can be measured with high quantum efficiency of about 90% and with S/N ratio of more than 10dB.

## Description

### FIELD OF THE INVENTION

The present invention relates to a high-speed pulsed homodyne detector in telecom band, especially to a high-speed pulsed homodyne detector in telecom band to yield less-distorted observation output waveform of signal pulse light by eliminating the frequency components higher than or equal to the third harmonics of the repetition rate of local pulse light at the measurement of signal pulse light in telecom band.

### BACKGROUND OF THE INVENTION

Conventionally, there is a method to use a pulsed homodyne detector for measurement of the quadrature amplitude of signal pulse light in telecom band. There are two types of detectors, one is frequency domain type to measure the noise power spectrum of the output of the pulsed homodyne detector and another is time domain type to measure the quadrature amplitude of signal pulse light. The pulsed homodyne detector of frequency domain type can provide mean noise power of repeated signal pulse light. The pulsed homodyne detector of time domain type can provide quadrature amplitude of each signal pulse light.

Local pulse light in the telecom band with constant repetition rate is generated and the local pulse light and the signal pulse light are made to interfere with 50/50 beam splitter to yield two output lights in the conventional pulsed homodyne detector. The signal proportional to the signal pulse light intensity is obtained out of the output terminal of the photo detector that is constructed by connecting differentially the first photodiode to convert one output light into one electrical signal and the second photodiode to convert the another output light into another electrical signal.

However, because of mismatch of photo detectors and so on, the components of the local pulse light are emerged without elimination. When the intensity of the leakage components of the local pulse light becomes much stronger than the intensity of the signal pulse light, the first-stage amplifier gets saturated and turns unable to measure the intensity of the signal pulse light. Then the present inventor et al have proposed the method to avoid the saturation of the amplifier in the way of attenuating the harmonics of the repetition rate of the local pulse light using a band-elimination filter in the pulsed homodyne detector (www2.nict.go.jp/q/q265/s802/seika/h17/seika/90/90 nihon-u.pdf).

That is, the most important capability of the homodyne detector is the common mode rejection ratio (CMRR) in the subtraction process of the photocurrent of two photodiodes. For the reason of insufficient CMRR, the harmonics of the repetition rate of the local pulse light saturate the first-stage amplifier and the linearity of amplification is lost. Generally, when the measurement is performed using the local pulse light of higher repetition rate than 1 MHz, it is very difficult to maintain CMRR more than 40 dB all over the amplification band.

The conventional pulsed homodyne detector is roughly divided into two kinds. One is a slow-response high-sensitivity detector and another is a fast-response low-sensitivity detector. A charge amplifier is used for the amplifier of the slow-response high-sensitivity homodyne detector. The charge amplifier yields its output after accumulating charges for a fixed time. Therefore, it has very low noise and high gain, and it can achieve a large S/N ratio. However, since the response speed of charge amplifier is slow, the repetition rate of detectable pulse light is restricted lower than 1 MHz.

On the other hand, an operational amplifier is used for the amplifier of the fast-response low-sensitivity homodyne detector. An operational amplifier is faster than a charge amplifier. The repetition rate of detectable pulse light can be raised to several 100 MHz. However, the noise factor is greatly inferior to that of a charge amplifier. An S/N ratio deteriorates especially at the repetition rate exceeding 10 MHz. There are mainly two reasons in this phenomenon. One is that response speed and a gain are in a trade-off relation. Moreover, thermal noise increases in high-speed operation. For this reason, the faster the amplifier operates, the more the gain decreases. Then it causes the S/N ratio to deteriorate. Another is reduction in CMRR.

In almost all the pulsed homodyne detector, differential mixing is performed using direct junction of anode and cathode of photodiodes. This is because high CMRR can be obtained easily. However, CMRR decreases as frequency becomes high. When CMRR decreases, the harmonics of the repetition rate of the local pulse light that can be removed at low frequency becomes unable to be removed and the amplifier becomes saturated by those remaining harmonics. Therefore, the limit level for intensity of incident local pulse light decreases. Then, the S/N ratio becomes insufficient.

[Non-patent document 1] - http://www2.nict.go.jp/q/q265/s802/seika/h18/seika/90/90_nihon-u.pdf
[Non-patent document 2] - J. Wenger, Rosa Tualle-Brouri and P. Grangier, "Pulsed homodyne measurements of femtosecond pulses generated by single-pass parametric deamplification," Opt. Lett., 27, 1267 (2004).
[Non-patent document 3] - H. Hansen, T. Aichele, C. Hettich, P. Lodahl, A. I. Lvovsky, J. Mlynek, and S. Schiller, "Ultrasensitive pulsed, balanced homodyne detector: application to time-domain quantum measurements," Opt. Lett. 26, 1714 (2001).

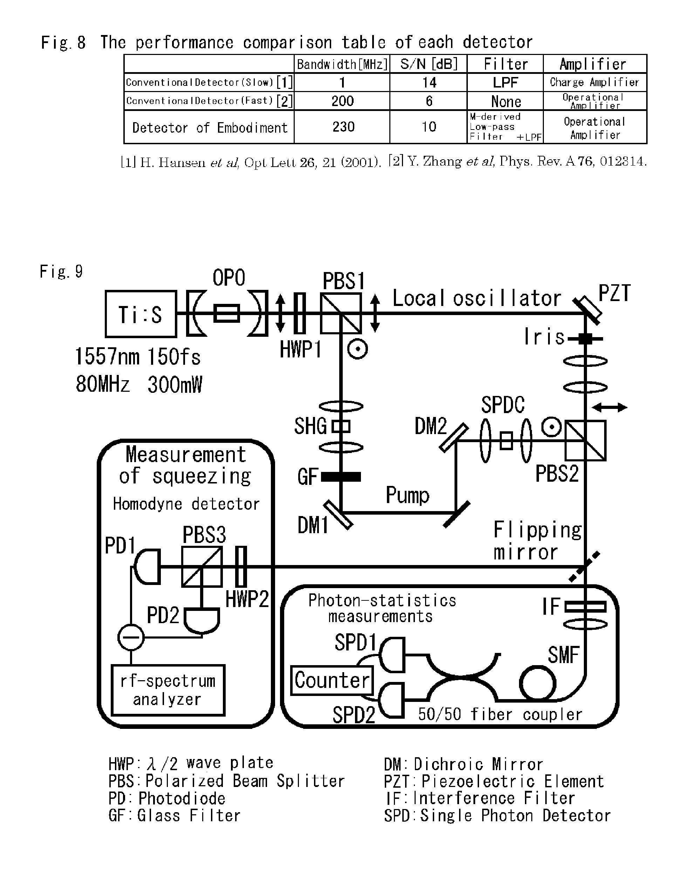

In the non-patent document 1 there is reported an experiment to generate a quadrature-squeezed light at wavelength of 1550 nm by the parametric amplification process to pump the second harmonics of a femtosecond laser at wavelength of 1550 nm into PPLN. As shown in Fig. 9, pulsed light at wavelength of 778 nm generated in the second harmonics generator (SHG) is injected into PPLN as pumping light to cause spontaneous down conversion (SPDC) for generating squeezed light. The flipper mirror enables to switch a homodyne detector and a single photon detector, and then noise measurement and approximation of photon pair statistics can be achieved with the same system. The homodyne detector is consisted of two photodiodes, charge amplifiers and a pulse-shaping amplifier. The maximum repetition rate is about 2.0 MHz. This homodyne detector measures the quadrature amplitude of quadrature-squeezed light.

In the non-patent document 2 there are reported pulsed homodyne measurements of femtosecond pulses generated by single-pass parametric deamplification. This is the method to generate the squeezed light pulse using femtosecond pulse. A new scheme is described for the generation of pulsed squeezed light by use of femtosecond pulses that have been parametrically deamplified through a single pass in a thin (100 µm) potassium niobate crystal with a significant deamplification of about -3 dB. The quantum noise of each pulse is registered in the time domain by single-shot homodyne detection operated with femtosecond pulses; the best squeezed quadrature variance was 1.87 dB below the shot-noise level. Such a scheme provides a basic resource for time-resolved quantum communication.

In the non-patent document 3 there is reported an ultrasensitive pulsed, balanced homodyne detector: application to time-domain quantum measurements. A pulsed, balanced homodyne detector has been developed for precise measurement of the electric field quadratures of pulsed optical quantum states. A high level of common mode suppression (>85 dB) and low electronic noise (730 electrons per pulse) provide a signal-to-noise ratio of 14 dB for measurement of the quantum noise of individual pulses. Measurements at repetition rates as high as 1 MHz are possible. As a test, quantum tomography of the coherent state was performed, and the Wigner function and the density matrix were reconstructed with 99.5 % fidelity. The detection system can be used for ultrarsensitive balanced detection in cw mode, e.g., for weak absorption measurements.

However, in the former pulsed homodyne detector of this inventor et al, there is a problem as follows. Fundamental and harmonics of the repetition rate of the local pulse light are eliminated with a filter. Then, in the frequency domain, accurate time average can be obtained. On the other hand, observing in the time domain, as the pulse waveform of the signal pulse light is distorted, the time domain information of each signal pulse light cannot be obtained accurately.

In order to achieve the quantum-combined measurement, quadrature-squeezed light source is necessary. For the development of the quadrature-squeezed light source, the technique to measure accurately the quadrature component of quantum noise is indispensable. A high-speed pulsed homodyne detector in time domain is necessary in order to perform measurement-induced non-Gaussian operation and so on with respect to that measurement. Though the measurement-induced non-Gaussian operation can be performed without a high-speed pulsed homodyne detector, a high-speed detector is desirable in considering practical use.

The object of this invention is, solving the above-mentioned existing problems, the measurement of the quadrature amplitude of signal pulse light with high quantum efficiency of about 90 % and with high S/N ratio of more than 10 dB using a pulsed homodyne detector able to operate at high repetition rate of 80 MHz at maximum.

To solve the above-mentioned problems, in the present invention, a high-speed pulsed homodyne detector in telecom band is constructed as follows. A photo detector is to cancel out substantially each other of fundamental components and to cancel out substantially each other of the second harmonics of the repetition rate of the local pulse light connecting two photodiodes differentially to convert each of two output lights into electrical signal generated by interference of the local pulse light and the signal pulse light of high repetition rate in telecom band using 50/50 beam splitter. An M-derived low-pass filter is to have notch frequency equal to the third harmonics of the repetition rate connected to the output terminal of the photo detector. The first amplifier is to amplify the output signal of the M-derived low-pass filter. A low-pass filter is to eliminate the higher frequency components than triple frequency of the repetition rate from the output signal of the first amplifier. The second amplifier is to amplify the output signal of the low-pass filter.

As constructed as mentioned above, the information about the quadrature amplitude of the signal pulse light can be obtained fast and accurately.

### BRIEF DESCRIPTION OF THE DRAWINGS

Fig.1 shows the conceptual drawing of the pulsed homodyne detector in the embodiment of the present invention.
Fig.2 shows the drawing to explain the performance to be required of the pulsed homodyne detector.
Fig.3 shows the graph to show the frequency characteristics of various filters.
Fig.4 shows the graph to show the pulse waveform after passing various filters.
Fix. 5 shows the graph to show the frequency characteristics of M-derived low-pass filter.
Fig.6 shows the circuit diagram of the pulsed homodyne detector in the embodiment of the present invention.
Fig.7 shows the graph to show the frequency characteristics of the result of the shot noise measured with the pulsed homodyne detector in the embodiment of the present invention and the graph to show the feature depending upon the intensity of the local pulse light.
Fig.8 shows the performance comparison table of each detector.
Fig.9 shows the drawing to show the examples of conventional pulsed homodyne detectors.

### DETAILED DESCRIPTION

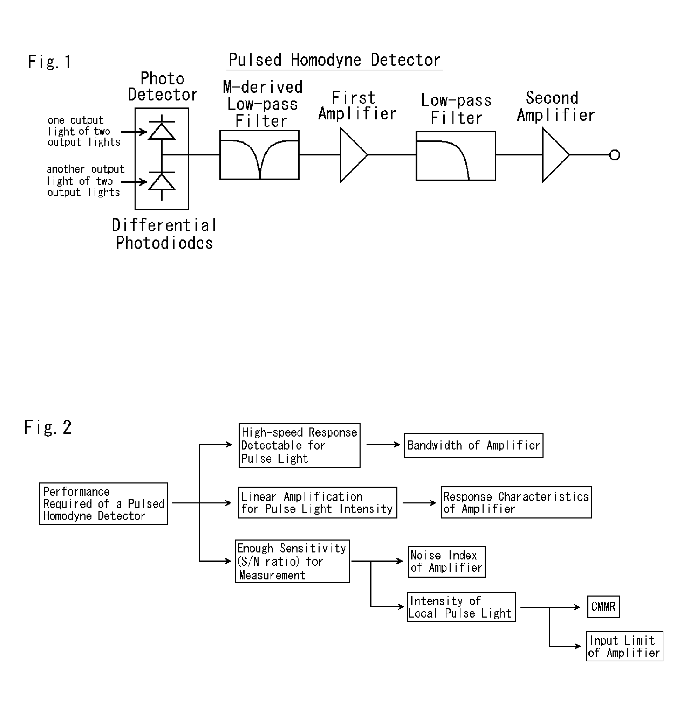

Hereafter, the most preferable embodiment of the invention is explained in detail, referring to Figs. 1 - 8.

The embodiment of this invention is a pulsed homodyne detector generating two output lights by interference of the local pulse light and the signal pulse light in the telecom band at repetition rate of 80 MHz, detecting in homodyne method two output lights using two photodiodes connected differentially, eliminating the third harmonics of the repetition rate, amplifying the detected signal, eliminating the higher frequency components than triple frequency of the repetition rate and amplifying the obtained signal again.

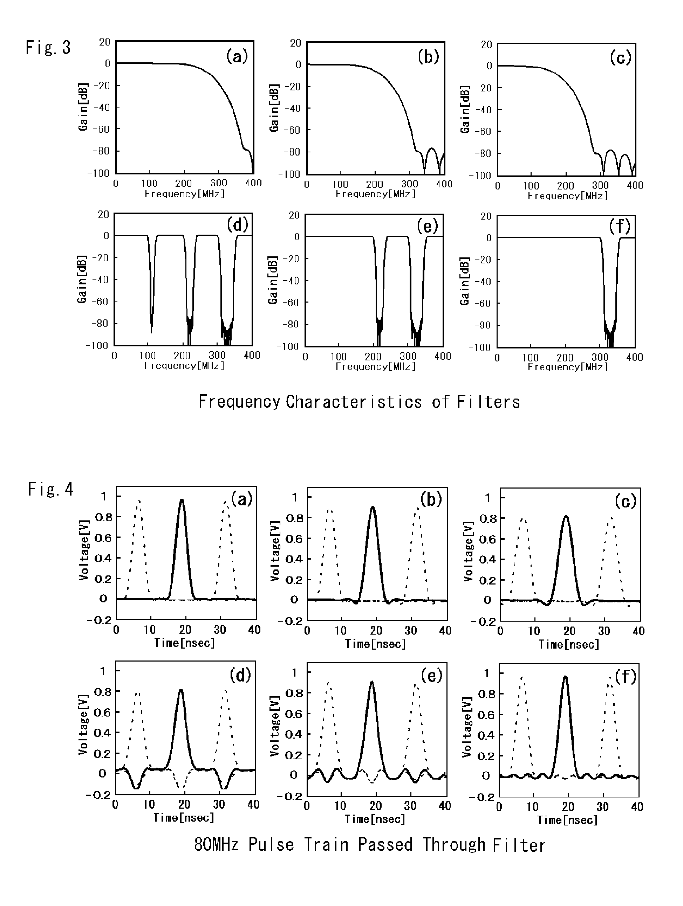

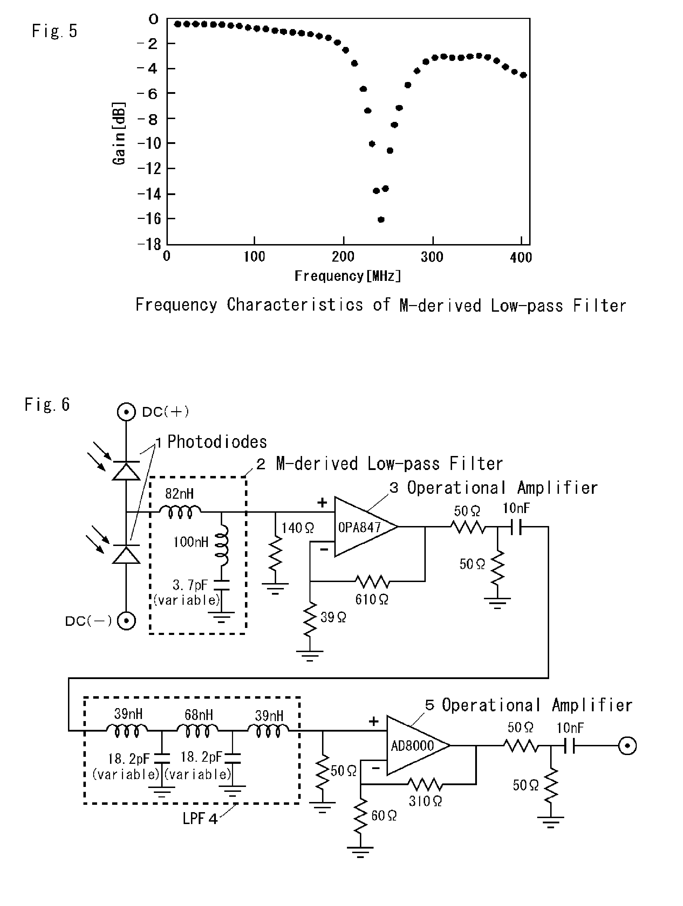

Fig. 1 is a conceptual diagram of the pulsed homodyne detector in the embodiment of this invention. Fig. 2 is a figure explaining the performance required of a pulsed homodyne detector. Fig.3 is graph to show the frequency characteristics of various filters. Fig.4 is a figure showing the pulse shape after passing various filters. Fig.5 is graph to show the frequency characteristics of an M-derived low-pass filter.

Fig. 6 is a circuit diagram of a pulsed homodyne detector. In Fig. 6, a photodiode 1 is an element to detect the intensity of pulse light. The M-derived low-pass filter 2 is a notched filter to eliminate 240 MHz component of the signal. An operational amplifier 3 is an amplifier to amplify the output signal of the M-derived low-pass filter. LPF 4 is a low-pass filter to eliminate the frequency components of the signal higher than 240 MHz. An operational amplifier 5 is an amplifier to amplify the output signal of LPF.

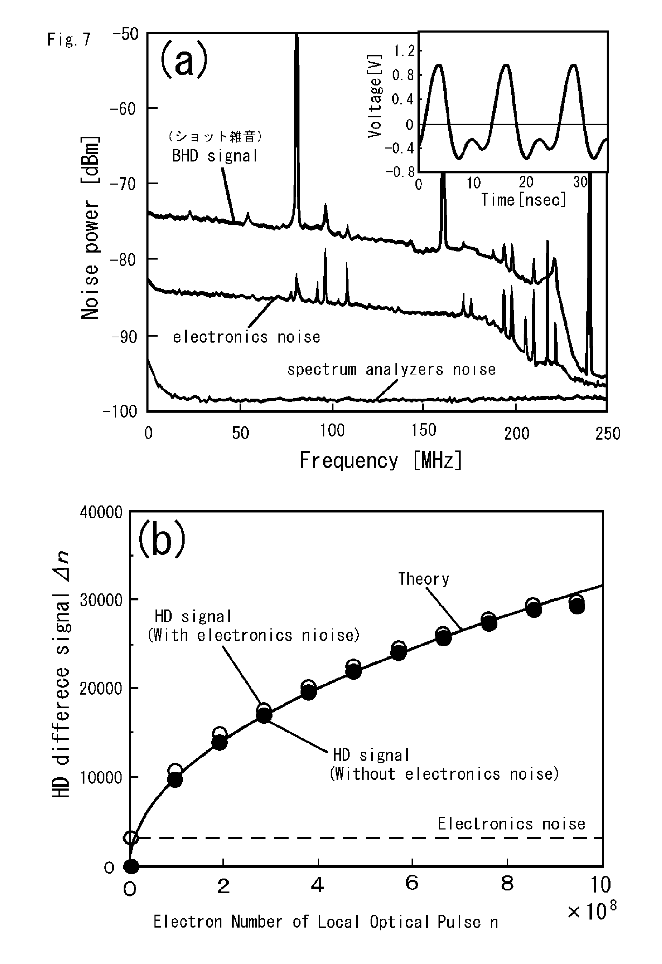

Fig. 7 shows a graph to show the frequency characteristics of the measurement result of shot-noise using a pulsed homodyne detector, and a graph to show the aspect of signal dependent on the intensity of local pulse light. The inserted figure in Fig. 7(a) is the time waveform of the output of one photodiode. It shows that repetition pulses at 80 MHz are dissociated completely and are not overlapping. Fig. 8 is the performance comparison table of each detector.

The function and operation of the pulsed homodyne detector of this invention constituted as mentioned above are explained. First, referring to Fig. 1, the outline of the function of the pulsed homodyne detector is explained. The local pulse light in the telecom band at fixed repetition rate faster than 1 MHz is made to interfere with the signal pulse light to generate two output lights. Two output lights are changed into electric signals using two photodiodes. Two photodiodes are connected differentially in order that each other of the fundamental components and each other of the second harmonics of the local pulse light are substantially canceled out respectively. An M-derived low-pass filter is connected to the output terminal of the optical detector to eliminate the triple frequency component of the repetition rate.

The output of the M-derived low-pass filter is amplified with the first amplifier. The higher frequency components than triple frequency of the repetition rate are eliminated out of the output signal of the first amplifier. The output signal of the low-pass filter is amplified with the second amplifier. Even if the higher frequency components than the third harmonics are remaining without elimination because of insufficient CMRR, the first-stage amplifier is made hard to saturate by eliminating such components using a suitable filter circuit at the front end of the detector circuit. Accurate information of each signal pulse light can be obtained in the manner of avoiding saturation of the amplifier and also avoiding too much elimination of signal elements. Therefore, a high-speed pulsed homodyne detector with high S/N ratio can be achieved.

Next, referring to Fig. 2, here is explained about the performance required of a pulsed (time domain) homodyne detector. Pulsed homodyne detector is a device to measure the quadrature amplitude of each signal pulse light according to the phase difference between the signal pulse light and the local pulse light. Therefore, broadband high-speed linear response is required of the amplifier. Concretely, the amplifier needs wider amplification bandwidth than twice of repetition rate of the signal pulse light (non-overlapping limit with neighboring pulse) and linearity in the amplification bandwidth. And, enough measurement sensitivity (S/N ratio) is necessary, too.

Fig. 2 shows the necessary performances and their determining factors of a pulsed homodyne detector. The amplifier used for the detector determines mostly the response speed and amplification linearity of the necessary performances for a detector. On the other hand, the main factors to determine measurement sensitivity can roughly be classified into two. One is the noise factor of the amplifier and another is the intensity of the local pulse light at detection. The main factors to determine the intensity of the local pulse light can be classified into two. One is the input limit of the whole detector. This is determined according to the optical input limit of a photodiode and the input/output limit of the amplifier. And another is the common mode rejection ratio (CMRR) at the differential mixing, i.e., the ability to eliminate the frequency component of repetition rate of a pulse and its harmonics.

In raising the speed of a pulsed homodyne detector, the most serious problems are the difficulty to widen the frequency bandwidth and the degradation of S/N ratio caused by CMRR reduction accompanying the bandwidth widening. The conventional pulsed homodyne detector has no filters to eliminate the frequency components of the repetition rate of pulse and its harmonics. The detector of this invention compensates the shortage of CMRR with elimination of the third harmonics of the repetition rate of the local pulse light using an M-derived low-pass filter. The intensity limit of the incident light is raised for the local pulse light in this way. And then S/N ratio is improved. The M-derived low-pass filter with some loss of gain is not used because that a pulsed homodyne detector needs essentially enough gain all over the amplification bandwidth. The result of MATLAB simulation shows that the original pulse information is lost when the fundamental wave and the second harmonics of repetition rate of the local pulse light are removed. However, the simulation also shows that most of original pulse information is not lost when only the third harmonics is removed. Moreover, the amplifier is easy to saturate especially around the third harmonics frequency. This is the reason why CMRR becomes smaller at higher frequency. From these reasons, the third harmonics is removed using an M-derived low-pass filter.

Next, referring to Figs. 3 and 4, the frequency characteristics of various filters are explained. The optimal filter circuit is obtained by simulation. The frequency characteristics of three sorts of low-pass filters (LPF) and three sorts of band-elimination filters (BEF) are shown in Fig. 3. Fig. 3(a) is a graph showing the frequency characteristics of the low-pass filter (LPF) of 230 MHz in cutoff frequency. Fig. 3(b) is a graph showing the frequency characteristics of the low-pass filter (LPF) of 180 MHz in cutoff frequency. Fig. 3(c) is a graph showing the frequency characteristics of the low-pass filter (LPF) of 140 MHz in cutoff frequency. Fig. 3(d) is a graph showing the frequency characteristics of the band elimination filter (BEF) with three notches of 80 MHz in center frequency with 8 MHz in bandwidth, 160 MHz in center frequency with 16 MHz in bandwidth and 240 MHz in center frequency with 24 MHz in bandwidth. Fig. 3(e) is a graph showing the frequency characteristics of the band elimination filter (BEF) with two notches of 160 MHz in center frequency with 16 MHz in bandwidth and 240 MHz in center frequency with 24 MHz in bandwidth. Fig. 3(f) is graph showing the frequency characteristics of the band elimination filter (BEF) of 240 MHz in center frequency with 24 MHz in bandwidth.

Fig. 4 shows the waveform of the pulse train of 80 MHz in repetition rate passed through the filter. Fig. 4(a) is the output waveform of the filter of Fig. 3(a). Fig. 4(b) is the output waveform of the filter of Fig. 3(b). Fig. 4(c) is the output waveform of the filter of Fig. 3(c). Fig. 4(d) is the output waveform of the filter of Fig. 3(d). Fig. 4(e) is the output waveform of the filter of Fig. 3(e). Fig. 4(f) is the output waveform of the filter of Fig. 3(f). As shown in Figs. 4(a) to 4(c), the waveform distortions caused by insertion of LPF are very small. An adjacent pulse is not affected when the bandwidth of the band-pass filter is set to be about twice of the repetition rate.

On the other hand, when CMRR of an optical detector is insufficient, it is necessary to insert BEF to eliminate the components of the repetition rate and its harmonics. As shown in Figs. 4(d) and 4(e), this BEF makes each pulse cause large waveform distortions on adjacent pulses. This causes the serious deterioration of the accuracy of homodyne detection result. However, it hardly influences the result of the statistical homodyne measurement for Gaussian state. Here the result shown in Fig. 4(f) should be noted. In the case shown in Fig. 4(f), only the third harmonics of the repetition rate is removed. In this case, there is very little influence on the adjacent signal pulse light. From this simulation result, it is known that the optimal filter should attenuate sufficiently the higher frequency components than the third harmonics of the repetition rate.

Next, referring to Fig. 5, the frequency characteristics of M-derived low-pass filter are explained. The M-derived low-pass filter is mounted at the front end of the amplification circuit to attenuate strongly the components at 240 MHz, the third harmonics of the repetition rate of 80 MHz. Since the noise at 240 MHz is attenuated about 16 dB, the filter can fully remove the remaining noise even though CMRR shortage passes the components of the local pulse light, and the saturation at the first operational amplifier can be prevented.

Next, referring to Fig. 6, here is explained the circuit of the pulsed time-domain balanced homodyne detector. This pulsed homodyne detector consists of two photodiodes (PD1 and PD2), M-derived low-pass filter, the first operational amplifier, LPF and the second operational amplifier. Each of two photodiodes is KPED020 of KYOUSEMI. Their cutoff frequency is 1 GHz. Their quantum efficiencies are 0.88±0.02 and 0.87±0.02. The cutoff frequency of the M-derived low-pass filter is 200 MHz and its notch frequency is 240 MHz. The first operational amplifier is TEXAS INSTRUMENTS OPA847 and its GBW is 3900 MHz. The cutoff frequency of LPF is 230 MHz. The second operational amplifier is AD8000 of ANALOG DEVICES and its GBW is 1500 MHz.

The photocurrent from PD1 and PD2 is mixed differentially at the connection of the anode and the cathode. CMRR at 80 MHz is 50 dB, CMRR at 160 MHz is 37 dB and CMRR at 240 MHz is 20 dB. The M-derived low-pass filter removes the third harmonics from the differential output signal and then the first operational amplifier amplifies the signal by noninverted amplification. The voltage gain of the first operational amplifier is 24.4 dB. Then, unnecessary high frequency components are removed by LPF, the second operational amplifier compensates the insufficient gain and its output signal is given to an oscilloscope.

Next, referring to Fig. 7, here is explained the measurement result of the shot noise using a pulsed homodyne detector. The frequency characteristics of the output signal are shown in Fig. 7(a). The average power of the local pulse light is 6.6 mW. Repetition rate is 80 MHz and its pulse width is 150 fs. The graph of Fig. 7(a) shows that this pulsed homodyne detector has the bandwidth of about 200 MHz and also has the uniform amplification characteristics up to about 230 MHz. Moreover, the output signal shows the characteristics of typical white noise in all bands other than the repetition rate of 80 MHz and its harmonics. The inserted graph in the upper right part is the real waveform chart displayed on an oscilloscope (output when closing one photodiode).

Fig. 7(b) shows the features that the measurement result of fluctuations (shot noise) is dependent on the intensity of the reference pulse light. The thermal noises of the optical detector are about 2900 electrons/pulse. The experimental value corresponds well with the theoretical value up to near 830 million electrons per pulse in intensity of the reference pulse light and it shows that the amplifier is not saturated and the linearity is maintained. Moreover, it is seen that S/N ratio is about 10 dB at maximum.

Thus, the pulsed homodyne detector can measure the quadrature amplitude of the signal pulse light in pulse train of the repetition rate of 80 MHz at maximum. Its quantum efficiency reaches to about 90 % and its S/N ratio also amounts to 10 dB. Even when the incident intensity of the local pulse light is strong, high S/N ratio can be obtained since linearity can be maintained without saturation of the first-stage amplifier with the optimal filter mounted at the front end of the amplifier. This pulsed homodyne detector can measure the quadrature amplitude of the squeezed light. Compared with the case without the M-derived low-pass filter, S/N ratio is improved by about 4 dB. The detector with the repetition rate of 80 MHz and with S/N ratio of 10 dB at maximum can be achieved. The performance comparison table of each detector is shown in Fig. 8.

As explained above, in the embodiment of the present invention, the quadrature amplitude of the signal pulse light can be measured as the pulsed homodyne detector is constructed as generating two output lights by interference of the local pulse light and the signal pulse light in the telecom band at repetition rate of 80 MHz, detecting in homodyne method two output lights using two photodiodes connected differentially, eliminating the third harmonics of the repetition rate, amplifying the detected signal, eliminating the higher frequency components than triple frequency of the repetition rate and amplifying the obtained signal again.

### INDUSTRIAL APPLICABILITY

The high-speed pulsed homodyne detector in the telecom band of the present invention is most suitable for the high-speed pulsed time-domain homodyne detector enable to measure accurately the quadrature components of the quantum noise at the measurement-induced non-Gaussian operation and so on.

### REFERENCE SYMBOLS

1 A photodiode
2 An M-derived low-pass filter
3 An operational amplifier
4 A low-pass filter
5 An operational amplifier

## Claims

1. A high-speed pulsed homodyne detector in telecom band comprising:
a photo detector to cancel out substantially each other of fundamental components and to cancel out substantially each other of the second harmonics of the repetition rate of said local pulse light connecting two photodiodes differentially to convert each of two output lights into electrical signal generated by interference of the local pulse light and the signal pulse light of high repetition rate in telecom band using 50/50 beam splitter,
an M-derived low-pass filter having notch frequency equal to the third harmonics of said repetition rate connected to the output terminal of said photo detector,
a first amplifier to amplify the output signal of said M-derived low-pass filter,
a low-pass filter to eliminate the higher frequency components than triple frequency of said repetition rate from the output signal of said first amplifier and a second amplifier to amplify the output signal of said low-pass filter.
